(19) **Europäisches Patentamt**

**European Patent Office**

**Office européen des brevets**

(11) Veröffentlichungsnummer : **0 347 553 B1**

(12) **EUROPÄISCHE PATENTSCHRIFT**

(45) Veröffentlichungstag der Patentschrift :
**13.11.91 Patentblatt 91/46**

(51) Int. Cl.$^5$ : **A21C 7/01**

(21) Anmeldenummer : **89107328.0**

(22) Anmeldetag : **24.04.89**

(54) **Maschine zum Rundwirken von Teigstücken.**

(30) Priorität : **22.06.88 DE 3821045**

(43) Veröffentlichungstag der Anmeldung :
**27.12.89 Patentblatt 89/52**

(45) Bekanntmachung des Hinweises auf die
Patenterteilung :
**13.11.91 Patentblatt 91/46**

(84) Benannte Vertragsstaaten :
**AT CH GB IT LI SE**

(56) Entgegenhaltungen :
**DE-A- 3 526 947**
**GB-A- 274 353**

(73) Patentinhaber : **Werner & Pfleiderer GmbH**
**Theodorstrasse 10 Postfach 30 12 20**
**W-7000 Stuttgart 30 (DE)**

(72) Erfinder : **Schwab, Wilhelm**
**Rosenstrasse 13**
**W-7134 Knittlingen 2 (DE)**
Erfinder : **Müller, Gerhard, Dipl.-Ing.**
**Südstrasse 2**
**W-7144 Asperg (DE)**

(74) Vertreter : **Rau, Manfred, Dr. Dipl.-Ing. et al**
**Rau & Schneck, Patentanwälte Königstrasse 2**
**W-8500 Nürnberg 1 (DE)**

## Beschreibung

Die Erfindung betrifft eine Maschine zum Rundwirken von Teigstücken nach dem Oberbegriff der Anspruches 1.

Bei einer derartigen aus der DE-AS 1126333 (entsprechend US-PS 3152039) bekannten Maschine liegt das Wirkband über einen Umschlingungsbereich von etwa 150° an dem Außenumfang der Kammertrommel mit einer solchen aus einer Vorspannung des Wirkbandes resultierenden radial wirkenden Kraft an, daß es aufgrund der Reibung zwischen Wirkband und Kammertrommel schlupffrei mitgenommen wird. Diese Andrückkraft wird dadurch erzeugt, daß die Spannung des Wirkbandes mittels einer verstellbaren Spannrolle eingestellt wird. Die Spannung des Wirkbandes wird hierbei so gewählt daß am Beginn des Wirkvorganges das Wirkband den notwendigen Druck auf ein Teigstück ausübt, um die Einleitung des Wirkvorganges zu bewirken. Gegen Ende des Wirkvorganges, wenn das Teigstück eine kugelige Form annimmt, wird das Band durch das Teigstück von der Kammertrommel abgehoben. Eine ordnungsgemäße Funktion ist nur schwer erreichbar, da die Reibkräfte zwischen Kammertrommel und Wirkband für eine einwandfreie Mitnahme in der Regel nicht ausreichend sind. Wenn aus diesem Grunde eine Umlenkrolle des Wirkbandes als Bandantriebswalze ausgebildet wird, dann muß ebenfalls die notwendige Spannung des Wirkbandes für einen einwandfreien schlupffreien Antrieb sehr groß sein, was wiederum das Abheben des Wirkbandes im Wirkbereich stark beeinträchtigt. Darüber hinaus können bei einer vorgegebenen Kammertrommel nur Teigstücke etwa gleichbleibender Größe rundgewirkt werden, da andernfalls die Teigstükke nicht die gewünschte und erforderliche kugelige Form annehmen können und/oder die Mitnahme des Wirkbandes durch die Kammertrommel gestört wird, wenn das Wirkband über einen zu großen Bereich von der Kammertrommel abgehoben wird.

Aus der DE-A 3526947 ist ebenfalls eine Maschine zum Rundwirken von Teigstücken nach dem Oberbegriff des Anspruches 1 bekannt, bei der ein über Umlenkrollen geführtes Wirkband in einem ersten Anlagebereich gegen die Kammertrommel anliegt. Die Kammertrommel selber ist mit Nuten versehen, in denen exzentrische Ringe relativ zur Wirktrommel drehbar angeordnet sind. Auf diesen Ringen liegt das Wirkband an, so daß eine genau definierte Wirkraumhöhe gegeben ist. Die exzentrischen Ringe können mittels einer Einstellvorrichtung in Umfangsrichtung verdreht werden, wodurch die Wirkraumhöhe veränderbar ist. Die Ringe werden mittels dieser Einstellvorrichtung gehalten. Das Wirkband wird durch seine Anlage an der Kammertrommel in einem Anfangsbereich in Umfangsrichtung mit der gleichen Umfangsgeschwindigkeit wie die Kammertrommel mitbewegt. Eine Anpassung der Wirkraumhöhe an unterschiedlich große Teigstücke ist möglich ; Gewichts- und damit Volumenschwankungen während der Produktion können damit aber nicht aufgefangen werden.

Aus der DE-C 2850936 ist bereits eine Maschine zum Rundwirken von Teigstücken mit einer in gleicher Weise ausgebildeten Kammertrommel und einer entsprechenden Kammertrommel bekannt, bei der im Rundwirkbereich der Maschine eine Abstützung vorgesehen ist, die über einen Teil ihrer in Umfangsrichtung der Kammertrommel gemessenen Länge in einem sich in Drehrichtung der Kammertrommel vergrößernden Abstand vom Umfang der Kammertrommel angeordnet ist. Hierdurch wird also ein genau definierter sich erweiternder Spalt geschaffen, der es den Teigstücken ermöglicht, ihren Durchmesser entsprechend dem zunehmenden Abstand zwischen Wirktrommel und Abstützung zu vergrößern. Diese Abstützung wird durch stabförmige Stützrollen gebildet, die auf einer endlosen umlaufend antreibbaren Kette angeordnet sind, wobei auf diese stabförmigen Stützrollen ein endloses Wirkband lose aufgelegt ist, das von den Teigstücken und den Stützrollen in Umlaufrichtung mitgenommen wird. Diese bekannte Maschine erfordert einen beträchtlichen apparativen Aufwand für die Abstützung und zusätzlich einen erheblichen Aufwand für die Einstellbarkeit des sich erweiternden Spaltes. Die Entwicklung der Teigstücke beim Rundwirken ist nicht immer gleich ; sie ist vielmehr einerseits von der Teigart, beispielsweise also dem Rezept und der Mehlqualität, und andererseits von der Teigführung, also beispielsweise Gärpausen, Teigtemperatur und dgl., abhängig. Ein trockener Teig entwickelt sich beispielsweise langsamer als ein feuchterer Teig. Daraus folgt, daß das Abheben des Wirkbandes von der Wirktrommel bei einem trockenen Teig später erfolgen muß als bei einem feuchteren Teig. Derartige feine Unterschiede sind mit einer fest einstellbaren Führung des Wirkbandes fast nicht zu erfassen.

Der Erfindung liegt die Aufgabe zugrunde, eine Maschine der gattungsgemäßen Art so auszugestalten, daß mit einfachen Mitteln bei einer vorgegebenen Kammertrommel auch Teigstücke in größeren Volumen- und-/oder Gewichtsschwankungsbereichen ohne wesentliche Einstellarbeiten an der Maschine rundgewirkt werden können.

Diese Aufgabe wird erfindungsgemäß durch die Merkmale im Kennzeichnungsteil des Anspruches 1 gelöst. Ein Merkmal der Erfindung liegt darin, daß ein loses völlig oder zumindest weitgehend ungespanntes Wirkband mit einem Zwangsantrieb versehen wird. Dadurch kann sich das Band entsprechend den Formänderungen der Teigstücke während des fortschreitenden Rundwirkens diesen in seinem Abstand zur Kammertrommel anpassen und hierbei den notwendigen Gegendruck auf die Teigstücke in Richtung auf die

2

Wirktrommel ausüben, ohne aber einen exakt vorgegebenen Abstand zur Wirktrommel aufzuweisen bzw. aufweisen zu müssen.

Durch Anspruch 2 wird eine Maßnahme angegeben, durch die insbesondere in der Weiterbildung nach den Ansprüchen 3 und 4 das Wirkband über einen wesentlichen Teil des Umschlingungsbereiches mit einstellbarem Andruck an der Wirktrommel anliegt, wobei dieser Andruck so gewählt wird, daß das Wirkband im Endbereich des Rundwirkvorganges durch den Druck von den kugelig werdenden Teigstücken von der Kammertrommel abgehoben wird. Eine alternative Lösung hierzu gibt Anspruch 5 wieder, bei dem das Wirkband selber — in seiner Umlaufrichtung gesehen — hinter dem Zwangsantrieb aber vor dem Umschlingungsbereich mit einer geringen Spannkraft beaufschlagt wird, so daß es ebenfals bei fortschreitendem Rundwirkvorgang von der Kammertrommel abgehoben werden kann.

In einer weiteren Alternative nach Anspruch 6 kann das Wirkband die Kammertrommel im Umschlingungsbereich mit Spiel umschlingen, in gewisser Weise also durchhängen. Insbesondere hierbei ist die Anordnung des Zwangsantriebes entsprechend Anspruch 7 von Vorteil. Durch die Weiterbildung nach Anspruch 8 wird hierbei sichergestellt, daß der Durchhang des Wirkbandes im von der Kammertrommel ablaufenden Trum sich nicht auf die Spannung des Wirkbandes im Umschlingungsbereich auswirken kann. Hierdurch läßt sich sicherstellen, daß das Wirkband im gesamten außen umlaufenden Bereich zwischen der Brems-Vorrichtung und dem Zwangsantrieb gespannt ist, so daß das Spiel bzw. der Durchhang des Wirkbandes sich weitgehend auf den Umschlingungsbereich konzentriert. Um das Maß, um das das Wirkband durch die Teigstücke von der Kammertrommel abgehoben werden kann, exakt einstellen zu können, sind die Maßnahmen nach Anspruch 9 vorgesehen.

Anspruch 10 gibt eine vorteilhafte Ausgestaltung des Zwangsantriebs wieder.

Weitere Einzelheiten der Erfindung ergeben sich aus der nachfolgenden Beschreibung von Ausführungsbeispielen anhand der Zeichnung. Es zeigt

Fig. 1    eine Maschine zum Rundwirken von Teigstücken in Seitenansicht, wobei die Wirktrommel und die Kammertrommel gemäß der Schnittlinie I-I in Fig. 5 geschnitten sind,

Fig. 2    eine weitere Ausführungsform einer Maschine zum Rundwirken von Teigstücken in Seitenansicht, wobei die Wirktrommel und die Kammertrommel gemäß der Schnittlinie I-I in Fig. 5 geschnitten sind,

Fig. 3    eine dritte Ausführungsform einer Maschine zum Rundwirken von Teigstücken in Seitenansicht, wobei die Wirktrommel und die Kammertrommel gemäß der Schnittlinie I-I in Fig. 5 geschnitten sind,

Fig. 4    die Ausführungsform nach Fig. 1, wobei ein Rundwirkvorgang dargestellt ist und

Fig. 5    einen vertikalen Querschnitt durch die Wirktrommel mit Kammertrommel entsprechend der Schnittlinie V-V in den Fig. 1 bis 4.

Allen Ausführungsformen ist gemeinsam, daß sie eine um eine Welle 1 drehantreibbare zylindrische Wirktrommel 2 aufweisen. Konzentrisch um diese Wirktrommel 2 ist eine Kammertrommel 3 angeordnet, die nur geringes Spiel zur Wirktrommel 2 aufweist. Diese Kammertrommel 3 weist über ihren gesamten Umfang nur durch Trennwände 4 voneinander getrennte zur Wirktrommel 2 einerseits und nach außen andererseits offene Kammern 5 auf. Die Kammertrommel 3 ist in einer Drehrichtung 6, in der Zeichnung im Uhrzeigersinn, mit konstanter Drehgeschwindigkeit drehantreibbar. Die Wirktrommel 2 ist in gleicher Weise in Drehrichtung 6 drehantreibbar, wobei dieser Drehbewegung noch eine hin- und her- gehende Dreh- bzw. Schwenkbewegung um die Achse 7 von Wirktrommel 2 und Kammertrommel 3 und eine hin- und hergehende Bewegung in Richtung der Achse 7 überlagert wird. Die hin- und hergehende Schwenk- bzw. Drehbewegung der Wirktrommel 2 um die Achse 7 ist durch den Doppelpfeil 8 angedeutet. Diese Arten des Antriebs der Wirktrommel 2 einerseits und der Kammertrommel 3 andererseits sind in der Praxis bei derartigen Maschinen zum Rundwirken von Teigstücken allgemein bekannt und allgemein üblich.

Weiterhin ist ein Wirkband-Führungsgestell 9 vorgesehen, das zur Lagerung, Führung und zum Antrieb eines Wirkbandes 10, 10', 10" dient. Dieses Führungsgestell 9 umgibt die Kammertrommel 3 — bezogen auf die Drehrichtung 6 — auf ihrer von oben nach unten laufenden Seite und auf ihrer Unterseite. Von hier erstreckt es sich im wesentlichen horizontal bis zu einer Abwurfstelle 11, wo sich ein Abtransport-Förderband 12 anschließt. Das Führungsgestell 9 erstreckt sich zur Oberseite der um die waagerechte Achse 7 gelagerten Kammertrommel bis kurz vor deren Oberseite, so daß in die jeweils oberste Kammer 5 von oben in Zuführrichtung 13 ein in üblicher Weise portioniertes Teigstück 14 von vorgegebenem Volumen und/oder Gewicht zugeführt werden kann. Auch solche vorgeordnete Teigteilvorrichtungen sind allgemein, beispielsweise aus der DE-AS 1126333 (entsprechend US-PS 3125039) bekannt.

Das jeweilige Wirkband 10, 10', 10" ist derart um die Kammertrommeln 3 geführt, daß es sich — bezogen auf die Drehrichtung 6 — hinter der vorstehend erwähnten Aufgabestelle 15 für ein Teigstück 14 in noch zu schildernder Weise an die äußere Oberfläche 16 der Kammertrommel 3 legt und diese in einem Umschlingungsbereich 17 bis zu einer unteren, der Aufgabestelle 15 etwa diametral gegenüberliegenden Abgabestelle 18 für die Teigstücke 14 umschlingt. Von der Abgabe :elle 18 wird das jeweilige Wirkband 10, 10', 10" als ablaufendes Trum 19 gegenüber der Horizontalen leicht geneigt bis zur Abwurfstelle 11 geführt und über eine nicht angetriebene Umlenkrolle 20 um angenähert 180° umgelenkt. Von dort wird es als Untertrum 21 unter den Trommeln 2, 3 zurück und über den Umschlingungsbereich hinaus geführt. Von dort wird es um etwa 90° nach oben umgelenkt und läuft als Vertikaltrum 22, 22', 22" nach oben bis über die Aufgabestelle 15 hinaus, wo es insgesamt um etwas mehr als 180° umgelenkt wird und als auflaufendes Trum 23, 23" in der bereits geschilderten Weise auf die Kammertrommel 3 aufläuft.

Die Teigstücke 14 werden in den Kammern 5 durch die axiale und tangentiale Relativbewegung der Wirktrommel 2 und der Kammertrommel 3 gegeneinander gewirkt, wobei sie sich im Umschlingungsbereich 17 gegen das Wirkband 10, 10', 10" abstützen. Mit zunehmendem Transport in Drehrichtung 6 in Richtung auf die Abgabestelle 18, also mit fortschreitendem Wirkvorgang nehmen die Teigstücke zunehmend kugelige Form an, d.h. ihr radialer Platzbedarf in der jeweiligen Kammer 5 nimmt zu. Die hieraus resultierenden Maßnahmen werden für die einzelnen Ausführungsformen nacheinander beschrieben.

Allen Ausführungsformen ist in diesem Zusammenhang noch gemeinsam, daß das Wirkband 10, 10', 10" von einem Zwangsantrieb 24 angetrieben wird, der eine im Führungsgestell 9 gelagerte Antriebswalze 25 aufweist, die von einem Elektromotor 26 antreibbar ist. Das Wirkband 10, 10', 10" umschlingt diese Antriebswalze 25 und wird von einer Druckwalze 27 von außen gegen die Antriebswalze 25, beispielsweise mittels einer Druckfeder 28 gedrückt. Damit ist ein schlupffreier Zwangsantrieb des Wirkbandes 10, 10', 10" gewährleistet, der nur und ausschließlich von dem Zwangsantrieb 24 her erfolgt, und zwar in der Weise, daß die Geschwindigkeit des Wirkbandes 10, 10', 10" identisch der Umfangsgeschwindigkeit der Kammertrommel 3 ist.

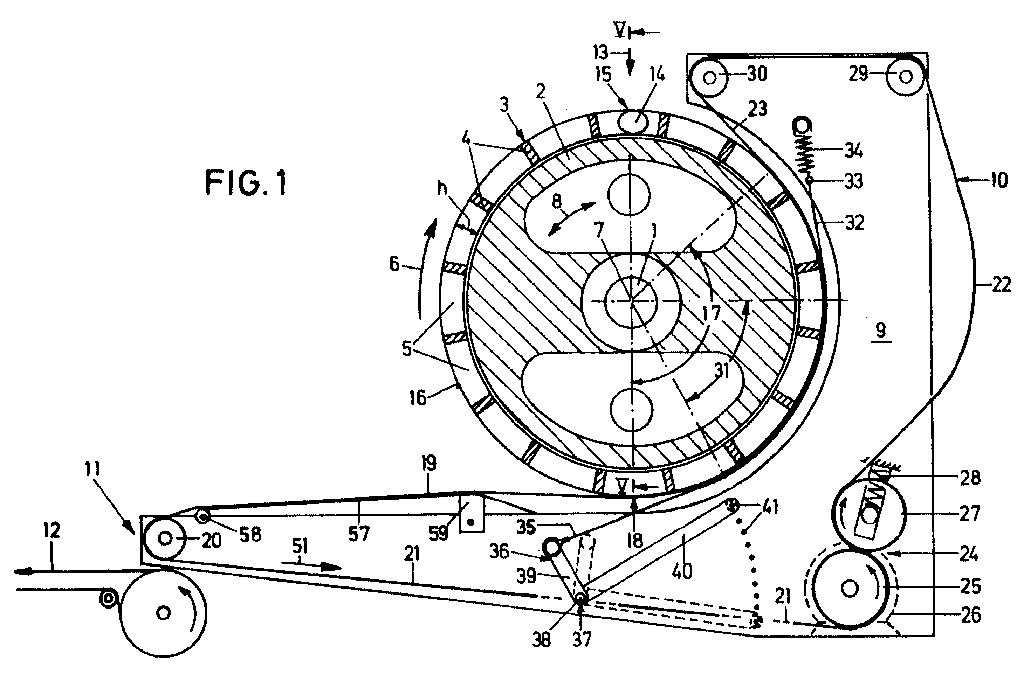

Bei der Ausführungsform nach Fig. 1 ist der Zwangsantrieb 24 an der Übergangsstelle zwischen Untertrum 21 und Vertikaltrum 22 angeordnet. Das Vertikaltrum läuft — wie in der Zeichnung angedeutet ist — mit sehr viel Spiel über zwei obere Umlenkrollen 29, 30 und von dort als auflaufendes Trum 23 in den Umschlingungsbereich 17 ein. In einem zwischen dem Beginn des Umschlingungsbereiches 17 und dessen Ende, also der Abgabestelle 18 liegenden Bereich, befindet sich ein Andrückbereich 31, in dem ein Druckband 32, beispielsweise in Form einer Metallfolie angeordnet ist, das mit seinem oberen, also dem Beginn des Umschlingungsbereichs 17 benachbarten Ende 33 über eine Zugfeder 34 elastisch nachgiebig am Führungsgestell 9 befestigt ist. Sein unteres, der Abgabestelle 18 benachbartes Ende 35 ist an einer Spannvorrichtung 36 angebracht, der im wesentlichen durch einen Winkelhebel 37 gebildet ist, der um eine zur Achse 7 parallele, also horizontale Schwenkachse 38 im Führungsgestell 9 gelagert ist. Am Ende seines einen Hebelarms 39 ist das Druckband 32 befestigt, während sein anderer Hebelarm 40 mittels einer Rasteinrichtung 41 in unterschiedlichen Stellungen am Führungsgestell 9 einrastbar ist. Die Stellung des Hebelarms 39, in der das Druckband 32 am stärksten gespannt ist, ist in Fig. 1 ausgezogen dargestellt, während die Stellung geringster Spannung des Druckbandes 32 gestrichelt dargestellt ist. Der andere Bereich 31 endet vor der Abgabestelle 18, so daß die Abgabe der fertig rundgewirkten Teigstücke 14 ohne weiteres möglich ist. Die Einstellung der Spannung des Druckbandes 32 durch entsprechende Wahl der Zugfeder 34 einerseits und durch entsprechende Einstellung der Spannvorrichtung 36 andererseits erfolgt in der Weise, daß das Wirkband 10 im Umschlingungsbereich 17 bei Nichtvorhandensein von Teigstücken 14 an der äußeren Oberfläche 16 der Kammertrommel 3 anliegt; beim Rundwirken der Teigstücke 14, bei denen deren Durchmesser an sich die Höhe h der Kammern 5 überschreitet, kann es sich ohne nennenswerte Gegenkraft in radialer Richtung zur Achse 7 von der Oberfläche 16 abheben und übt dann nur eine geringe Kraft in Richtung zur Wirktrommel 2 auf das jeweilige Teigstück 14 aus, so daß der Rundwirkvorgang ungestört und ordnungsgemäß abläuft. Das Wirkband 10 selber übt im Umschlingungsbereich 17 keine aus einer Eigenspannung herrührenden radialen Kräfte auf die Oberfläche 16 der Kammertrommel 3 aus.

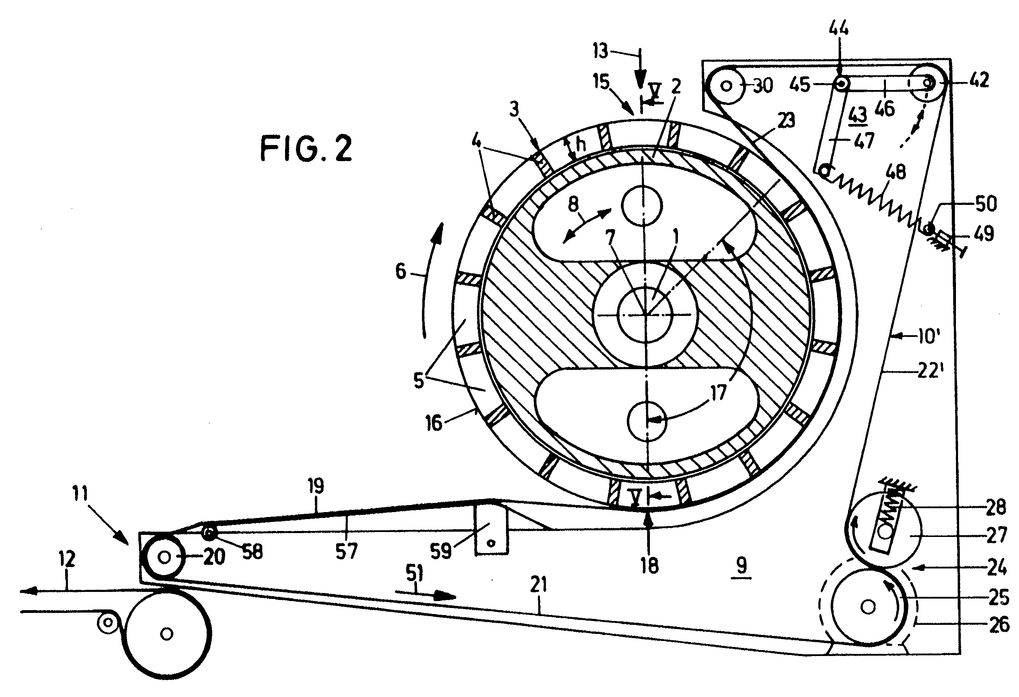

Die Ausgestaltung nach Fig. 2 unterscheidet sich von der nach Fig. 1 dadurch, daß kein Druckband vorhanden ist und daß anstelle der Umlenkrolle 29 eine Spannrolle 42 im oberen Bereich des Führungsgestells 9 vorhanden ist, die an einer Spanneinrichtung 43 angebracht ist. Diese weist einen Winkelhebel 44 auf, der um eine zur Achse 7, also ebenfalls horizontale Schwenkachse 45 im Führungsgestell 9 gelagert ist. Am Ende des einen Hebelarms 46 ist die Spannrolle 42 drehbar gelagert. Am Ende des anderen Hebelarms 47 des Winkelhebels 44 greift eine als Zugfeder ausgebildete Spannfeder 48 an, die am Führungsgestell 9 festgelegt ist, wobei eine Einstelleinrichtung 49 zur Verlegung des Befestigungspunktes 50 der Spannfeder 48 und damit zum veränderlichen Vorspannen der Spannfeder 48 vorgesehen sein kann. Die Spanneinrichtung 43 befindet sich — in Umlaufrichtung 51 des Wirkbandes 10' — hinter dem Zwangsantrieb 24. Die Wahl der Feder 48 und deren Vorspannung mittels der Einstelleinrichtung 49 und damit die Spannung des Wirkbandes 10' im Umschlingungsbereich 17 werden so gewählt, daß bei Nichtvorhandensein von Teigstücken 14 das Wirkband 10' leicht an der Oberfläche 16 der Kammertrommel 3 anliegt. Bei fortschreitendem Wirkvorgang kann das Wirkband 10' dann in gleicher Weise, wie dies vorstehend bereits im Hinblick auf Fig. 1 beschrieben wurde, von der Oberfläche 16 abheben.

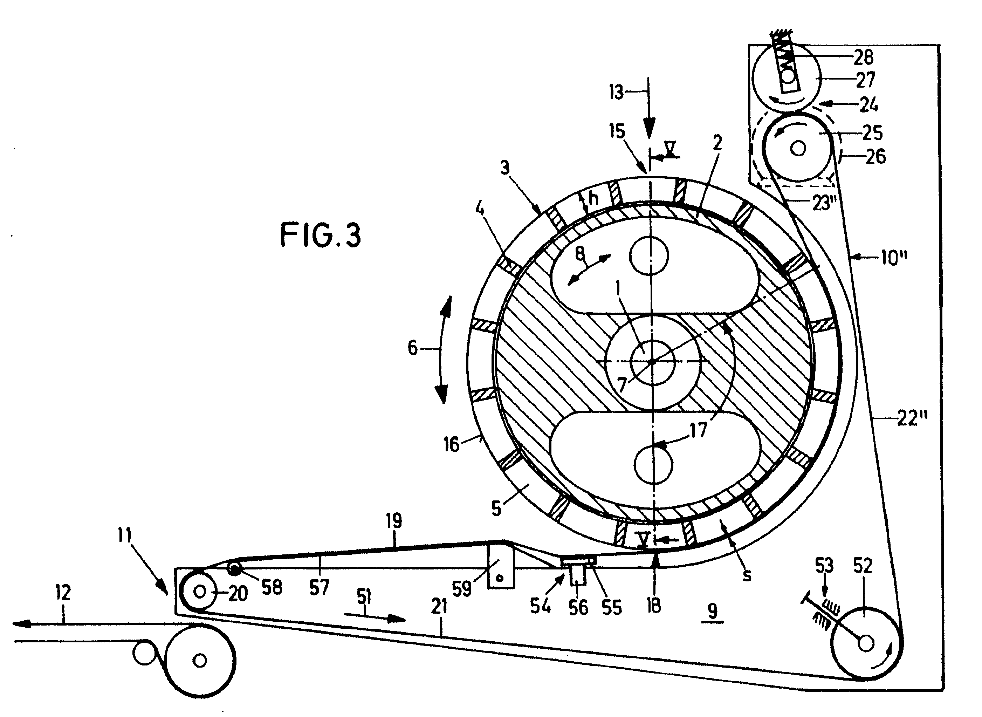

Bei der Ausführungsform nach Fig. 3 ist am Übergang vom Untertrum 21 zum Vertikaltrum 22″ lediglich eine Einstellrolle 52 vorgesehen. Das Vertikaltrum 22″ führt zum Zwangsantrieb 24, der in diesem Fall im oberen Bereich des Führungsgestells 9 angeordnet ist, so daß von der Antriebswalze 25 unmittelbar das auflaufende Trum 23″ des Wirkbandes 10″ abläuft. Die Einstellrolle 52 ist mittels einer Einstelleinrichtung 53 verschiebbar, womit der Durchhang des Wirkbandes 10″ im Umschlingungsbereich 17 eingestellt werden kann. Mit anderen Worten kann hierdurch der Abstand s des Wirkbandes 10″ in dem der Abgabestelle 18 benachbarten Bereich des Umschlingungsbereichs 17 verändert bzw. eingestellt werden.

Damit der mit der Einstelleinrichtung 53 einstellbare Durchhang des Wirkbandes 10″ relativ zur Oberfläche 16 der Kammertrommel 5 sich nicht auf das ablaufende Trum 19 auswirkt, ist — bezogen auf die Umlaufrichtung 51 kurz hinter der Abgabestelle 18 — eine Brems-Vorrichtung 54 angeordnet, die beispielsweise aus einem Saugkasten 55 gebildet sein kann, der über einen Unterdruckanschluß 56 an eine Unterdruckquelle angeschlossen ist. Anstelle eines solchen Saugkastens 55 kann auch eine seitlich angreifende Backenbremse od.dgl. vorgesehen sein. Durch diese Brems-Vorrichtung 54 werden das ablaufende Trum 19, das Untertrum 21 und das Vertikaltrum 22 unter gleichbleibender Zugspannung gehalten, so daß bei einer bestimmten Einstellung der Einstellrolle 52 mittels der Einstelleinrichtung 53 der Durchhang des Wirkbandes 10″ im Umschlingungsbereich unverändert bleibt. Um den in dieser Weise durchhängenden Bereich des Wirkbandes 10″ möglichst genau definiert zu halten, ist der Zwangsantrieb 24 möglichst dicht vor dem Umschlingungsbereich 17 angeordnet. Ein weiterer wesentlicher Grund für die Anordnung der Brems-Vorrichtung 54 an der geschilderten Stelle liegt darin, daß das Untertrum 21 unvermeidbar ein nicht vernachlässigbares Gewicht hat, das zu einem Durchhang dieses Untertrums 21 und damit zu einem Spannen des Wirkbandes 10″ gegen die äußere Oberfläche 16 der Kammertrommel 3 führt.

Hinter der Abgabestelle 18 und der Abwurfstelle 11 kann eine Wirkband-Auflageplatte 57 angeordnet sein, die in der Nähe der Umlenkrolle 20 mittels eines Schwenkgelenks 58 angelenkt ist und die in der Nähe der Abgabestelle 18 über eine höheneinstellbare Stütze 59 abgestützt ist. Der Abstand der Auflageplatte 57 von der Abgabestelle 18 ist groß genug, um Beeinträchtigungen eines freien Transports der Teigstücke 14 auszuschließen. Der Zweck dieser Auflageplatte 57 liegt darin, die von der Kammertrommel 3 bzw. den Teigstücken 14 auf das jeweilige Wirkband 10, 10', 10″ ausgeübten Schwingungen zu dämpfen.

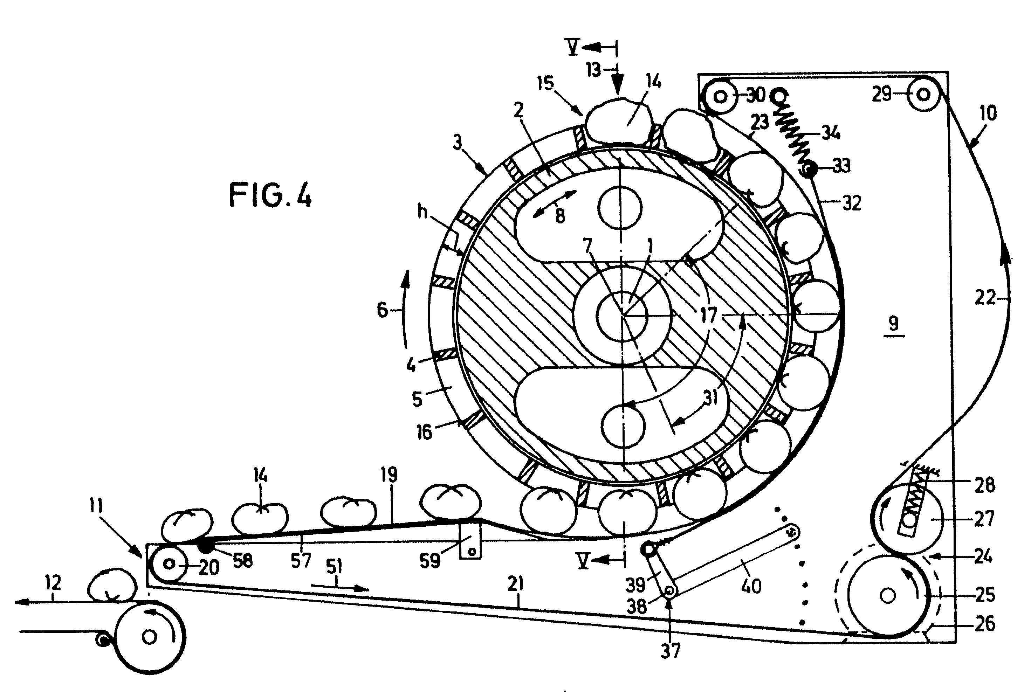

Fig. 4 zeigt in im Grundsatz identischer Darstellung die Ausführungsform nach Fig. 1, wobei hierbei relativ große Teigstücke 14 aufgegeben und gewirkt werden. Diese Darstellung zeigt, wie die Teigstücke 14 über den Umschlingungsbereich 17 des Wirkbandes 10, der auch als Wirkbereich definiert werden kann, zunehmend runder werden und, welchen Abstand das Wirkband 10 hierbei von der äußeren Oberfläche 16 der Kammertrommel 3 einnehmen kann.

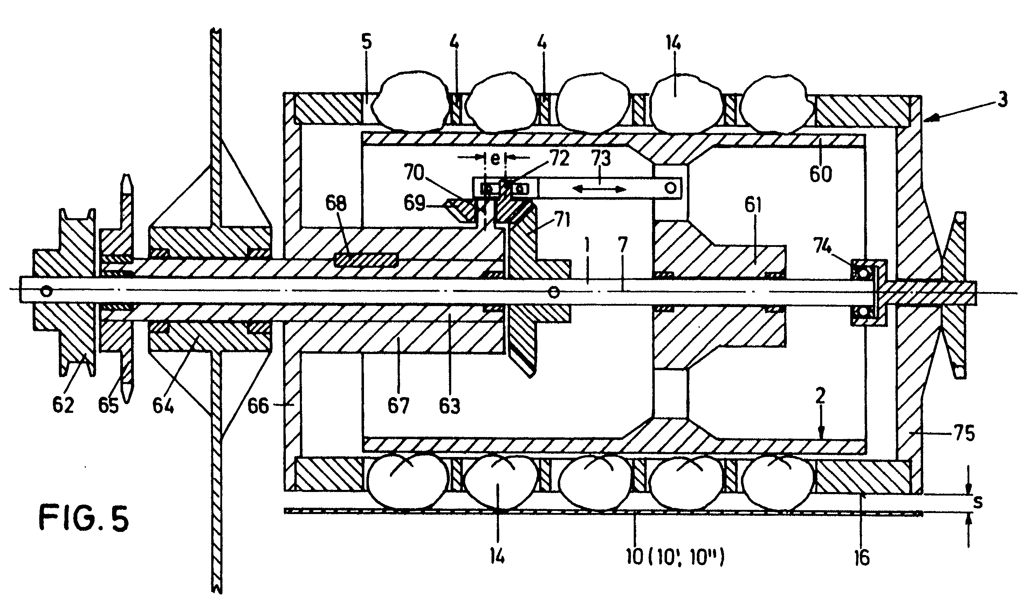

Der Vollständigkeit halber ist in Fig. 5 ein Längsschnitt durch die aus Welle 1, Wirktrommel 2 und Kammertrommel 3 bestehende Einheit dargestellt. Die Wirktrommel 2 besteht aus einem äußeren relativ dünnwandigen Zylinder 60, der über eine relativ lange Nabe 61 frei drehbar und axial verschiebbar auf der Welle 1 angeordnet ist. Die Welle 1 ist an ihrem außenliegenden Ende mit einem Keil-Riemenrad 62 versehen, über das ein Drehantrieb dieser Welle erfolgt.

Die Kammertrommel 3 ist über eine frei drehbar auf der Welle 1 abgestützte Hohlwelle 63 in einem ortsfesten Lager 64 drehbar abgestützt. An der Hohlwelle 63 ist ein Zahn-Riemenrad 65 drehfest angebracht, mittels dessen ein Drehantrieb der Kammertrommel 3 erfolgt. Hierzu ist die Kammertrommel 3 mit einer an einer Stirnwand 66 konzentrisch angebrachten Lagerhülse 67 auf die Hohlwelle 63 aufgeschoben und hier mittels einer Paßfederverbindung 68 drehfest festgelegt. Bei einem Drehantrieb des Zahnriemenrades 65 dreht sich also die Kammertrommel 3 um die Achse 7.

Auf der Lagerhülse 67 ist ein Zahn-Kegelrad 69 um eine zur Achse 7 senkrechte Achse 70 frei drehbar gelagert, das mit einem weiteren Zahn-Kegelrad 71 kämmt, das drehfest auf der Welle 1 befestigt ist. Bei einem Drehantrieb des Keil-Riemenrades 62 und damit der Welle 1 wird also das Zahn-Kegelrad 69 um seine Achse 70 gedreht.

Exzentrisch zur Achse 70 ist auf dem Zahn-Kegelrad 69 ein Kurbelzapfen 72 angebracht, an dem eine Schubkurbelstange 73 gelagert ist, die wiederum an der Nabe 61 der Wirktrommel 2 angelenkt ist. Bei einem Drehantrieb der Welle 1 wird also die Schubkurbelstange 73 parallel zur Achse 7 hin- und hergeschoben, wodurch die Wirktrommel 2 eine hin- und hergehende Bewegung in Richtung der Achse 7 relativ zur Kammertrommel 3 erhält. Der Hub dieser Axialbewegung entspricht dem doppelten Abstand e zwischen der Achse 70 und dem Kurbelzapfen 72.

Die Welle 1 ist über ein Lager 74 in der anderen Stirnwand 75 der Kammertrommel 3 axial unbeweglich aber frei drehbar abgestützt. Es sei wiederholt, daß dieser Grundaufbau von Wirktrommel 2 mit Kammertrommel 3 allgemein bekannt und üblich ist.

## EP 0 347 553 B1

### Patentansprüche

1. Maschine zum Rundwirken von Teigstücken (14), mit einer in Umfangsrichtung (8) und in Richtung einer Achse (7) antreibbaren Wirktrommel (2), mit einer diese konzentrisch zur Achse (7) umgebenden, in einer Umfangsrichtung (6) drehantreibbaren Kammertrommel (3), die radial nach innen zur Wirktrommel (2) und radial nach außen offene Wirkkammern (5) aufweist, und mit einem die Kammertrommel (3) über einen Teil ihres Umfangs in einem Umschlingungsbereich (17) umschlingenden, die Teigstücke (14) gegen die Wirktrommel (2) drückenden und am Herausfallen aus den Wirkkammern (5) hindernden Wirkband (10, 10', 10"), dadurch gekennzeichnet, daß das Wirkband (10, 10', 10") mittels eines Zwangsantriebs (24) umlaufend antreibbar ist, der unabhängig von Anlagekräften zwischen Wirkband (10, 10', 10") und Oberfläche (16) der Kammertrommel (3) ist und daß die vom Wirkband (10, 10', 10") im Umschlingungsbereich (17) auf die Kammertrommel (3) ausgeübten Anlagekräfte kleiner sind als die von den Teigstücken (14) auf das Wirkband (10, 10', 10") ausgeübten Kräfte.

2. Maschine nach Anspruch 1, dadurch gekennzeichnet, daß mindestens über einen mittleren Abschnitt des Umschlingungsbereichs (17) das Wirkband (10) auf seiner der Kammertrommel (3) abgewandten Seite an einem Druckband (32) anliegt.

3. Maschine nach Anspruch 2, dadurch gekennzeichnet, daß das Druckband (32) in seiner Längsrichtung elastisch nachgiebig gehalten ist.

4. Maschine nach Anspruch 3, dadurch gekennzeichnet, daß das Druckband (32) in seiner Längsrichtung veränderlich vorspannbar ist.

5. Maschine nach Anspruch 1, dadurch gekennzeichnet, daß das Wirkband (10') vorspannbar ist, wobei die Spannkraft nur so groß ist, daß es durch von den Teigstücken (14) auf das Wirkband (10') ausgeübte Kräfte von der Oberfläche (16) der Kammertrommel (3) abgehoben wird.

6. Maschine nach Anspruch 1, dadurch gekennzeichnet, daß das Wirkband (10") die Kammertrommel (3) im Umschlingungsbereich (17) mit Spiel (s) umschlingt.

7. Maschine nach Anspruch 1 oder 6, dadurch gekennzeichnet, daß der Zwangsantrieb (24) unmittelbar vor dem Umschlingungsbereich (17) des Wirkbandes (10") angeordnet ist.

8. Maschine nach Anspruch 6, dadurch gekennzeichnet, daß hinter dem Umschlingungsbereich (17) eine am Wirkband (10") angreifende Brems-Vorrichtung (54) vorgesehen ist.

9. Maschine nach Anspruch 6, dadurch gekennzeichnet, daß eine einstellbare Einstellrolle (52) im Bereich zwischen dem Umschlingungsbereich (17) und dem Zwangsantrieb (24) vorgesehen ist.

10. Maschine nach Anspruch 1, dadurch gekennzeichnet, daß der Zwangsantrieb (24) durch eine Antriebswalze (25) mit das Wirkband (10, 10', 10") gegen sie drückenden Druckwalze (27) gebildet ist.

11. Maschine nach Anspruch 1, dadurch gekennzeichnet, daß einer Abgabestelle (18) der Kammertrommel (3) nachgeordnet eine Wirkband-Auflageplatte (57) zur Abstützung des Wirkbandes (10, 10', 10") vorgesehen ist.

### Claims

1. A machine for kneading dough portions (14) into a round shape, comprising a kneading drum (2) adapted to be driven in the peripheral direction (8) and in the direction of an axis (7) and with, enclosing the kneading drum (2) concentrically of the axis (7) and adapted to be rotatingly driven in a peripheral direction (6), a compartmented drum (3) comprising kneading chambers (5) open radially outwardly and radially inwardly towards the kneading drum (2) and further comprising, looped around a part of the periphery of the compartmented drum (3) in the belt contact zone (17), a kneading belt (10, 10', 10") which presses the dough portions (14) against the kneading drum (2), preventing them from falling out of the kneading chambers (5), characterised in that the kneading belt (10, 10', 10") is adapted to be driven by a positive drive (24) which is independent of bearing forces between the kneading belt (10, 10', 10") and the surface (16) of the compartmented drum (3) and in that the bearing forces exerted by the kneading belt (10, 10', 10") on the compartmented drum (3) in the belt contact zone (17) are smaller than the forces exerted by the dough portions (14) on the kneading belt (10, 10', 10").

2. A machine according to Claim 1, characterised in that over at least a middle portion of the belt contact zone (17), that side of the kneading belt (10) which is remote from the compartmented drum (3) bears on a thrust belt (32).

3. A machine according to Claim 2, characterised in that the thrust belt (32) is elastically and resiliently supported in its longitudinal direction.

4. A machine according to Claim 3, characterised in that the thrust belt (32) can be variably pre-tensioned in its longitudinal direction.

6

5. A machine according to Claim 1, characterised in that the kneading belt (10') can be pre-tensioned, the tensioning force being just sufficient that it is lifted off the surface (16) of the compartmented drum (3) by the forces exerted on the kneading belt (10') by the dough portions (14).

6. A machine according to Claim 1, characterised in that the kneading belt (10) is looped with clearance(s) about the belt contact zone (17) of the compartmented drum (3).

7. A machine according to Claim 1 or 6, characterised in that the positive drive (24) is disposed immediately upstream of the belt contact zone (17) of the kneading belt (10").

8. A machine according to Claim 6, characterised in that a brake device (54), which acts on the kneading belt (10"), is provided after the belt contact zone (17).

9. A machine according to Claim 6, characterised in that an adjustable setting roller (52) is provided in the region between the belt contact zone (17) and the positive drive (24).

10. A machine according to Claim 1, characterised in that the positive drive (24) is constituted by a drive roller (25) with a pressure roller (27) which presses the kneading belt (10, 10', 10") against it.

11. A machine according to Claim 1, characterised in that downstream of a delivery station (18) of the compartmented drum (3) is a kneading belt support plate (57) to support the kneading belt (10, 10', 10").


## Revendications

1. Machine pour pétrir en forme de boule des portions de pâte (14), comportant un tambour de pétrissage (2) susceptible d'être entraîné selon la direction périphérique (8) et selon la direction d'un axe (7), un tambour à alvéoles (3) entourant le tambour de pétrissage concentriquement à l'axe (7), susceptible d'être entraîné en rotation selon une direction périphérique (6) et présentant des alvéoles de pétrissage (5) ouvertes radialement vers l'intérieur en direction du tambour de pétrissage (2) et radialement vers l'extérieur, et une bande de pétrissage (10, 10', 10") qui s'enroule sur une partie de la périphérie du tambour à alvéoles (3) selon une zone d'enroulement (17), et qui presse les portions de pâte (14) contre le tambour de pétrissage (2) et les empêche de s'échapper des alvéoles de pétrissage (5), caractérisée en ce que la bande de pétrissage (10, 10', 10") peut être entraînée en révolution au moyen d'un dispositif d'entraînement forcé (24) qui est indépendant des forces d'appui entre la bande de pétrissage (10, 10', 10") et la surface extérieure (16) du tambour à alvéoles (3), et en ce que les forces d'appui exercées sur le tambour à alvéoles (3), par la bande de pétrissage (10, 10', 10") dans la zone d'enroulement (17), sont inférieures aux forces exercées par les portions de pâte (14) sur la bande de pétrissage (10, 10', 10").

2. Machine selon la revendication 1, caractérisée en ce que la bande de pétrissage (10) est en appui, sur sa face opposée à celle qui est adjacente au tambour à alvéoles (3), sur une bande de pression (32), au moins le long d'un tronçon central de la zone d'enroulement (17).

3. Machine selon la revendication 2, caractérisée en ce que la bande de pression (32) est maintenue de manière à pouvoir se rétracter élastiquement dans sa direction longitudinale.

4. Machine selon la revendication 3, caractérisée en ce que la bande de pression (32) peut être mise sous tension préalable de manière variable, dans sa direction longitudinale.

5. Machine selon la revendication 1, caractérisée en ce que la bande de pétrissage (10') peut être mise sous tension préalable, la force de tension ne prenant qu'une valeur telle qu'elle est soulevée de la surface extérieure (16) du tambour à alvéoles (3) par les forces exercées par les portions de pâte (14) sur la bande de pétrissage (10').

6. Machine selon la revendication 1, caractérisée en ce que la bande de pétrissage (10") entoure le tambour à alvéoles (3), dans la zone d'enroulement (17), avec un jeu (s).

7. Machine selon la revendication 1 ou 6, caractérisée en ce que le dispositif d'entraînement forcé (24) est disposé directement avant la zone d'enroulement (17) de la bande de pétrissage (10").

8. Machine selon la revendication 6, caractérisée en ce qu'un dispositif de freinage (54) attaquant la bande de pétrissage (10") est prévu après la zone d'enroulement (17).

9. Machine selon la revendication 6, caractérisée en ce qu'un rouleau de réglage (52) réglable est prévu dans la zone entre le dispositif d'entraînement forcé (24) et la zone d'enroulement (17).

10. Machine selon la revendication 1, caractérisée en ce que le dispositif d'entraînement (24) est constitué par un rouleau d'entrainement (25) sur lequel un rouleau de pression (27) applique la bande de pétrissage (10, 10', 10").

11. Machine selon la revendication 1, caractérisée en ce qu'après une zone de déchargement du tambour à alvéoles (18), est prévue une plaque d'appui de bande de pétrissage (57) destinée à supporter la bande de pétrissage (10, 10', 10").

FIG.1

FIG. 2

EP 0 347 553 B1

FIG.3

FIG.4

FIG.5